Europäisches Patentamt

European Patent Office

Office européen des brevets

(19)

(11) Veröffentlichungsnummer : **0 109 001**
**B1**

(12) **EUROPÄISCHE PATENTSCHRIFT**

(45) Veröffentlichungstag der Patentschrift :
15.04.87

(21) Anmeldenummer : 83110930.1

(22) Anmeldetag : 02.11.83

(51) Int. Cl.⁴ : **F 16 H 37/02**

---

(54) **Kupplungsanordnung für ein Planetenräder-Umschaltgetriebe.**

---

(30) Priorität : 11.11.82 DE 3241789

(43) Veröffentlichungstag der Anmeldung :
23.05.84 Patentblatt 84/21

(45) Bekanntmachung des Hinweises auf die Patenterteilung : 15.04.87 Patentblatt 87/16

(84) Benannte Vertragsstaaten :
BE DE FR GB IT NL SE

(56) Entgegenhaltungen :
DE-A- 2 948 681
DE-A- 3 204 891
GB-A- 2 092 246
US-A- 4 290 320
US-A- 4 317 389
US-A- 4 342 238

(73) Patentinhaber : FORD-WERKE AKTIENGESELLS-
CHAFT
Ottoplatz 2 Postfach 21 03 69
D-5000 Köln 21 (DE)

Van Doorne's Transmissie B.V.
Dr. Hub van Doorneweg 120 Postbus 500
NL-5026 RA Tilburg (NL)

(72) Erfinder : Svab, Eugen
Masurenstrasse 17
D-5000 Köln 71 (DE)
Erfinder : van Deursen, Petrus Henricus
Polderweg 31
Asten (NL)
Erfinder : Cadée, Theodorus Petrus Maria
Pastor de Beeckstraat 11
Goirle (NL)

(74) Vertreter : Gauger, Hans-Peter, Dipl.-Ing.
Patentanwälte Dipl.-Ing.Hans-Jürgen Müller Dipl.-
Chem.Dr.Gerhard Schupfner Dipl.-Ing.Hans-Peter
Gauger Lucile-Grahn-Strasse 38
D-8000 München 80 (DE)

**Beschreibung**

Die Erfindung bezieht sich auf eine Kupplungsanordnung für ein Planetenräder-Umschaltgetriebe der durch den Oberbegriff des Patentanspruches 1 angegebenen Gattung.

Bei einer aus der DE-A-32 04 891 bekannten Kupplungsanordnung dieser Art sind das Umschaltgetriebe und die beiden Reibscheibenkupplungen auf der Seite des axial feststehenden Scheibenteils der Primärscheibe des Umschlingungsgetriebes angeordnet. An der Rückseite dieses axial feststehenden Scheibenteils der Primärscheibe ist der Servozylinder für den zur Betätigung der axial benachbart angeordneten Vorwärtskupplung vorgesehenen Servokolben befestigt. Andererseits ist an dem axial verstellbaren Scheibenteil dieser Primärscheibe ein rückwärtiger Zylindermantel einstückig ausgebildet, welcher der axialen Führung dieses Scheibenteils innerhalb des axial feststehenden Stellzylinders der hydraulischen Stelleinrichtung dient, deren Stellkolben durch ein zur zusätzlichen Axialführung des rückwärtigen Zylindermantels vorgesehene Sekundärteil des Stellzylinders abgestützt wird. Für diese bekannte Kupplungsanordnung ergeben sich damit relativ große axiale und auch radiale Abmessungen, die noch weiter durch das Vorsehen einer besonderen Anfahrkupplung in der Ausbildung eines hydrokinetischen Drehmomentwandlers vergrößert werden.

Bei einer daneben noch bekannten gattungsähnlichen Kupplungsanordnung gemäß der US-A-4 342 238 sind das Umschaltgetriebe und damit auch dessen Reibscheibenkupplungen auf der Seite des axial verstellbaren Scheibenteils der Primärscheibe des Umschlingungsgetriebes rückwärts von dessen hydraulischer Stelleinrichtung angeordnet. Der Stellkolben dieser Stelleinrichtung ist dabei an der Rückseite des axial verstellbaren Scheibenteils so befestigt, daß sich für seinen axial feststehenden Stellzylinder eine zu einem Einsatzkörper des Getriebegehäuses benachbarte Anordnung ergibt, wobei dieser Einsatzkörper auf der Nabe des Planetenradträgers des Umschaltgetriebes gelagert und an ihm der Servozylinder für den zur Betätigung der benachbart angeordneten Rückwärtskupplung vorgesehenen Servokolben einstückig ausgebildet ist. Der zur Betätigung der Vorwärtskupplung vorgesehene Servokolben ist dabei im übrigen auf der zu dem Stellkolben der hydraulischen Stelleinrichtung für den verstellbaren Scheibenteil der Primärscheibe des Umschlingungsgetriebes axial abgewandten äußeren Seite des Umschaltgetriebes angeordnet. Auch bei dieser bekannten Kupplungsanordnung ergeben sich somit größere axiale und auch radiale Abmessungen, die auch dabei durch das Vorsehen einer besonderen Anfahrkupplung in der Ausbildung eines hydrokinetischen Drehmomentwandlers noch weiter vergrößert werden.

Die Erfindung, wie sie in den Patentansprüchen gekennzeichnet ist, löst die Aufgabe, eine Kupplungsanordnung der angegebenen Gattung so auszubilden, daß für das gesamte Getriebeaggregat kleinere axiale und auch kleinere radiale Abmessungen erhalten werden können und dabei die Kupplungsanordnung gleichzeitig so ausgelegt werden kann, daß das Fahrzeug unabhängig von einer bestimmten Motorstärke sowie auch unabhängig von einem bestimmten Ladezustand und einer bestimmten Geländeform jeweils mit einem subjektiv angenehmen Empfinden vom Fahrer angefahren werden kann.

Die durch die Erfindung erreichten Vorteile liegen im wesentlichen darin, daß durch die bauliche Vereinigung der für die Vorwärtskupplung vorgesehenen Servovorrichtung und der für die Primärscheibe des Umschlingungsgetriebes vorgesehenen Stelleinrichtung die axialen Abmessungen des Getriebeaggregats verringert werden können. Diese bauliche Vereinigung läßt andererseits neben einer einfacheren Fertigungsmöglichkeit der einzelnen Getriebeteile gleichzeitig eine einfachere Ölzufuhr verwirklichen, so daß es mit einer entsprechenden Steuerung der Zuleitung des Drucköls zu den Servovorrichtungen der Vorwärts- und Rückwärtskupplungen und auch zu der Stelleinrichtung der Primärscheibe des Umschlingungsgetriebes sogar möglich ist, auf das Vorsehen einer besonderen Anfahrkupplung zu verzichten.

Die Erfindung wird nachfolgend anhand der lediglich einen Ausführungsweg darstellenden Zeichnung näher erläutert, die eine Schnittansicht eines mit der Kupplungsanordnung versehenen Getriebeaggregats zeigt, das für einen Einbau in ein Kraftfahrzeug mit einem Frontantrieb und einem in Fahrzeugquerrichtung angeordneten Antriebsmotor ausgebildet ist.

Das mit seinen axialen und radialen Abmessungen in der Gesamtheit sehr kompakt ausführbare Getriebeaggregat ist mit einer Eingangswelle für eine direkte Verbindung mit dem Antriebsmotor ausgebildet, dessen Antriebswelle dabei eine mit der Eingangswelle axial fluchtende Anordnung erfährt. Die Eingangswelle 1 ist über ein mittels einer Vorwärtskupplung 2 und einer Rückwärtskupplung 3 wahlweise in einen Vorwärts- und in einen Rückwärtsgang schaltbares Planetenräder-Umschaltgetriebe 4 mit einem stufenlos regelbaren Umschlingungsgetriebe 5 verbunden, dessen durch eine hydraulische Stelleinrichtung 6 verstellbare Primärscheibe koaxial zu der Eingangswelle angeordnet ist. Durch die Eingangswelle 1 wird auch eine abtriebsseitig innerhalb des Getriebegehäuses angeordnete Ölpumpe 7 angetrieben, die über einen abnehmbaren Stirndeckel des Getriebegehäuses zugänglich ist. Die mit einer abweichend ausgebildeten Stelleinrichtung 8 versehene Sekundärscheibe 9 des Umschlingungsgetriebes 5 ergibt eine zu der Eingangswelle 1 parallel angeordnete zweite Hauptachse des Getriebeaggregats, in der ein Nachschaltgetriebe 10 angetrieben wird, über das eine Verbindung mit einem Differentialgetriebe 11 besteht. Durch das Differentialgetriebe 11 werden die zu der Eingangswelle 1 parallel angeordneten und zu den angetriebenen Vorderrädern des Kraftfahrzeuges führenden Achsantriebswellen angetrieben.

Die Eingangswelle 1 ist mit einem Planetenradträger 12 des Umschaltgetriebes 4 einstückig ausgebildet. In dem Planetenradträger 12 sind auf Bolzen 13 mehrere miteinander kämmende Planetenräder 14a und 14b angeordnet, von denen ein erstes Planetenrad 14a mit einem Sonnenrad 15 und ein zweites Planetenrad 14a über das Planetenrad 14b mit einem Hohlrad 16 des Umschaltgetriebes 4 kämmen. Das Sonnenrad 15 ist auf einer hohlen Antriebswelle 17 für die Primärscheibe des Umschlingungsgetriebes 5 befestigt, die über ein Nadellager 18 auf der Eingangswelle 1 gelagert ist.

Die Vorwärts- und Rückwärtskupplungen 2 und 3 sind beide als Mehrscheibenkupplungen ausgebildet. Bei der Vorwärtskupplung 2 ist ein erster Träger 19 für erste Kupplungsscheiben an dem Planetenradträger 12 befestigt, während ein zweiter Träger für zweite Kupplungsscheiben mit einem Servozylinder 20 einstückig ausgebildet ist, der einen zur Betätigung dieser Vorwärtskupplung 2 dienenden Servokolben 21 aufnimmt. Wenn die Vorwärtskupplung 2 durch den Servokolben 21 bei dessen Druckbeaufschlagung betätigt wird, dann wird dadurch der Planetenradträger 12 zur Bildung eines Vorwärtsganges über das eine Planetenrad 14a und das Sonnenrad 15 mit der Antriebswelle 17 des Umschlingungsgetriebes 5 gekuppelt. Bei der Rückwärtskupplung 3 ist ein entsprechend vorgesehener erster Träger 22 für erste Kupplungsscheiben an dem Hohlrad 16 des Umschaltgetriebes 4 befestigt, während sein zweiter Träger für zweite Kupplungsscheiben durch das Getriebegehäuse gebildet wird. An der Stirnwand des Getriebegehäuses ist ein Servozylinder 37 ausgebildet, der einen für eine entsprechende Betätigung der Rückwärtskupplung 3 vorgesehenen Servokolben 23 aufnimmt. Wenn durch Druckbeaufschlagung des Servokolbens 23 die Rückwärtskupplung 3 zur Bildung eines Rückwärtsganges betätigt wird, dann wird dabei das Hohlrad 16 als Reaktionsglied des Umschaltgetriebes 4 festgehalten, so daß über das mit ihm kämmende Planetenrad 14b und das mit dem Sonnenrad 15 kämmende andere Planetenrad 14a die Antriebswelle 17 des Umschlingungsgetriebes 5 durch die Eingangswelle 1 in einer Rückwärtsdrehrichtung angetrieben wird.

Der als ein Blechformstück ausgebildete Servozylinder 20 ist an einem als Anschlagschulter 24 im Durchmesser vergrößerten Teil der Nabe des Sonnenrades 15 des Umschaltgetriebes 4 gemeinsam mit einem weiteren Blechformteil befestigt, das einen Stellkolben 25 der für die Primärscheibe des Umschlingungsgetriebes 5 vorgesehenen Stelleinrichtung 6 bildet. Die gegenseitige Befestigung und Ausbildung des Servozylinders 20 und dieses Stellkolbens 25 sind so gewählt, daß zwischen diesen beiden Teilen ein Hohlraum 26 ausgebildet wird, der in dem zu dem Servokolben 21 führenden Strömungsweg des Drucköls angeordnet ist. Der Servozylinder 20 und der Stellkolben 25 sind von einem Stellzylinder 27 der Stelleinrichtung 6 umgeben. Der Stellzylinder 27 ist an der Rückseite eines axial verstellbaren Scheibenteils 28 der Primärscheibe des Umschlingungsgetriebes 5 befestigt. Ein zweiter Scheibenteil 29 dieser Primärscheibe ist für eine axial feststehende Anordnung mit der Antriebswelle 17 einstückig ausgebildet. Durch die an der Nabe des axial verstellbaren Scheibenteils 28 anliegende Anschlagschulter 24 wird ein für den Verstellbereich der Primärscheibe des Umschlingungsgetriebes 5 maßgeblicher Begrenzungsanschlag erhalten, der durch eine auf die Antriebswelle 17 aufgeschraubte Stellmutter 30 feststellbar ist.

Der für die Zuführung des Drucköls an den Servokolben 21 der Vorwärtskupplung 2 genutzte Hohlraum 26 zwischen dem Servozylinder 20 und dem Stellkolben 25 ist über eine Bohrung 31 in der Nabe des Sonnenrades 15 und eine weitere Bohrung in der Antriebswelle 17 an einen Ölzulaufkanal 32 angeschlossen. Der Ölzulaufkanal 32 ist durch eine für die Ölpumpe 7 vorgesehene Pumpenantriebswelle 33 gebildet, die in der Antriebswelle 17 des Umschlingungsgetriebes 5 gelagert ist und durch die Eingangswelle 1 angetrieben wird. Ein zwischen den beiden Wellen 17 und 33 ausgebildeter Ringraum 34 bildet einen weiteren Ölzulaufkanal, der über eine Bohrung 35 in der Antriebswelle 17 und eine weitere Bohrung in der Nabe des verstellbaren Scheibenteils 28 an die Stelleinrichtung 6 angeschlossen ist. Durch eine entsprechend gesteuerte Zuleitung des Drucköls aus dem Ölzulaufkanal 32 in den Hohlraum 26 kann daher über eine in dem Servozylinder 20 vorgesehene Verbindungsöffnung 32' der Servokolben 21 für eine wahlweise Betätigung der Vorwärtskupplung 2 verschoben werden. Mit einer entsprechend gesteuerten Zuleitung des Drucköls aus dem Ringraum 34 in den an der Rückseite des axial verstellbaren Scheibenteils 28 gebildeten und mittels des Stellkolbens 25 und des Stellzylinders 27 geschlossenen Hohlraum kann andererseits ebenso wahlweise der Scheibenteil 28 axial verstellt werden, um für einen stufenlos regelbaren Wechsel des mit dem Umschlingungsgetriebe 5 bereit gestellten Übersetzungsverhältnisses ein Wandern von dessen Treibriemen 36 zwischen einer inneren und einer äußeren Relativlage der Primär- und Sekundärscheiben zu erreichen. Auch für den Servokolben 23 der Rückwärtskupplung 3 ist über eine nicht näher gezeigte Anschlußbohrung des Servozylinders 37 eine entsprechend gesteuerte Zuleitung von Drucköl möglich, um damit wahlweise die Rückwärtskupplung 3 betätigen zu können. Durch diese gesteuerte Zuleitung des Drucköls an die Servokolben 21 und 23 der Vorwärts- und Rückwärtskupplungen 2 und 3 sowie an die hydraulische Stelleinrichtung 6 für die Primärscheibe des Umschlingungsgetriebes 5 ist es daher möglich, jeden beliebigen Anfahrzustand des Kraftfahrzeuges ohne das Erfordernis für eine besondere Anfahrkupplung optimal zu gestalten. Für die gesamte Kupplungsanordnung ist dabei eine Ausbildung bereit gestellt, die eine kurze axiale Abmessung des gesamten Getriebeaggregates zuläßt, womit idealere Voraussetzungen für dessen Einbau zwischen die beiden Längsträger des Fahrzeugrahmens eines Kraftfahrzeuges mit Frontantrieb erhalten werden.

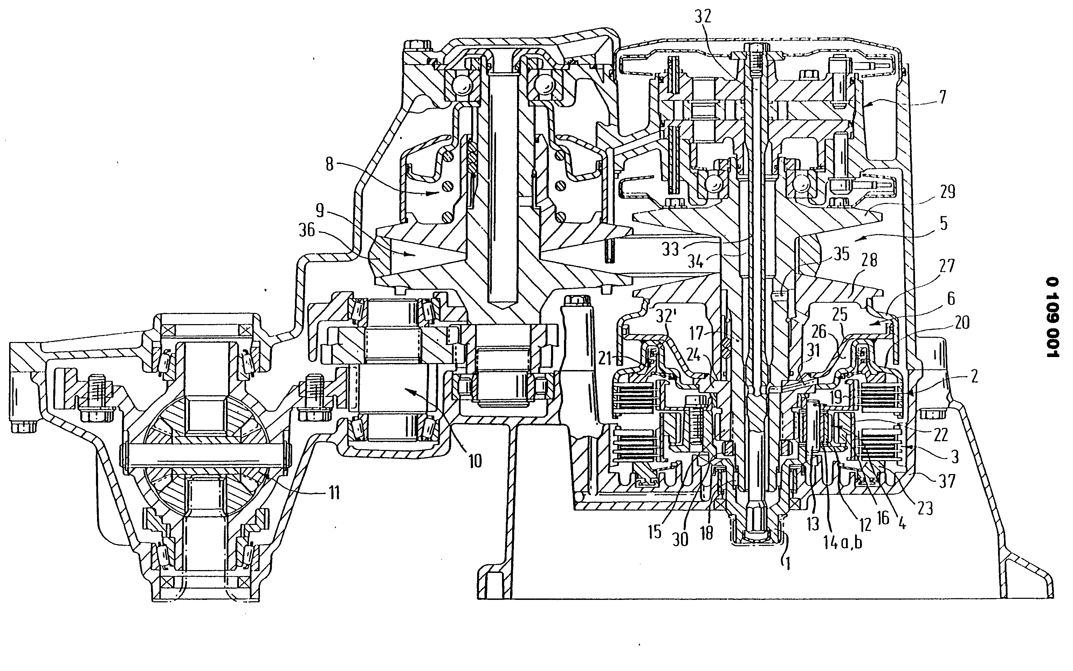

**Patentansprüche**

1. Kupplungsanordnung für ein mittels zweier hydraulish durch je einen Servokolben (21, 23) betätigbarer Reibscheibenkupplungen (2, 3) wahlweise in einen Vorwärts- bzw. Rückwärtsgang schaltbares Planetenräder-Umschaltgetriebe (4) in einem Getriebeaggregat für Fahrzeuge, insbesondere für Kraftfahrzeuge mit Frontantrieb, bei dem der Planetenradträger (12) des Umschaltgetriebes (4) durch die den Vorwärtsgang bildende eine Reibscheibenkupplung (2) mit einer zur Befestigung von dessen Sonnenrad (15) vorgesehenen Antriebswelle (17) für ein wenigstens an dem axial verstellbaren Scheibenteil (28) seiner Primärscheibe durch den Stellkolben (25) einer hydraulischen Stelleinrichtung (6) stufenlos regelbares Nachschalt-Umschlingungsgetriebe (5) kuppelbar und bei dem das Hohlrad (16) des Umschaltgetriebes (4) durch die den Rückwärtsgang bildende zweite Reibscheibenkupplung (3) mit dem Getriebegehäuse verbindbar sind, dadurch gekennzeichnet, daß der Stellkolben (25) der hydraulischen Stelleinrichtung (6) axial feststehend mit dem axial benachbart angeordneten Servozylinder (20) des Servokolbens (21) der Vorwärtskupplung (2) verbunden und von dem an dem axial verstellbaren Scheibenteil (28) der Primärscheibe des Umschlingungsgetriebes (5) befestigten Stellzylinder (27) zumindest in Teilbereichen umgeben ist.

2. Kupplungsanordnung nach Anspruch 1, dadurch gekennzeichnet, daß der Servozylinder (20) und der Stellkolben (25) durch an der Nabe des Sonnenrades (15) des Umschaltgetriebes (4) befestigte Blechformteile gebildet sind.

3. Kupplungsanordnung nach Anspruch 1 oder 2, dadurch gekennzeichnet, daß durch die Nabe des Sonnenrades (15) des Umschaltgetriebes (4) eine Anschlagschulter (24) für die Nabe des verstellbaren Scheibenteils (28) gebildet ist.

4. Kupplungsanordnung nach einem der Ansprüche 1 bis 3, dadurch gekennzeichnet, daß zwischen dem Servozylinder (20) und dem Stellkolben (25) ein Hohlraum (26) ausgebildet ist, der in dem zu dem Servokolben (21) führenden Strömungsweg des Drucköls angeordnet ist.

5. Kupplungsanordnung nach Anspruch 4, dadurch gekennzeichnet, daß an den Hohlraum (26) eine in der Nabe des Sonnenrades (15) des Umschaltgetriebes (4) und in der hohlen Antriebswelle (17) für das Umschlingungsgetriebe (5) ausgebildete Anschlußbohrung (31) an einen Ölzulaufkanal (32) angeschlossen ist, der durch eine in der hohlen Antreibswelle (17) gelagerte und durch den Planetenradträger (12) des Umschaltgetriebes (4) angetriebene hohle Pumpenantriebswelle (33) gebildet wird.

6. Kupplungsanordnung nach Anspruch 5, dadurch gekennzeichnet, daß ein zwischen der Pumpenantriebswelle (33) und der Antriebswelle (17) des Umschlingungsbetriebes (5) ausgebildeter Ringraum (34) in einem weiteren Strömungsweg des Drucköls angeordnet ist, der über eine Anschlußbohrung (35) in der Antriebswelle (17) und in der Nabe des verstellbaren Scheibenteils (28) an die hydraulische Stelleinrichtung (6) angeschlossen ist.

7. Kupplungsanordnung nach einem der Ansprüche 1 bis 6, dadurch gekennzeichnet, daß der Servozylinder (37) des Servokolbens (23) der Rückwärtskupplung (3) an einer Stirnwand des Getriebegehäuses einstückig ausgebildet ist.

8. Kupplungsanordnung nach einem der Ansprüche 1 bis 7, dadurch gekennzeichnet, daß der Planetenradträger (12) des Umschaltgetriebes (4) über ein Nadellager (18) auf der Antriebswelle (17) des Umschlingungsgetriebes (5) gelagert und eine mit ihm einstückig verbundene Getriebeeingangswelle (1) für eine direkte Verbindungsmöglichkeit mit dem Antriebsmotor des Fahrzeuges ausgebildet ist.

**Claims**

1. A clutch arrangement for a planetary reverse gear mechanism (4) of a transmission assembly for vehicles, especially for front wheel drive motor vehicles, which by means of two friction disk clutches (2, 3), that are each controllable in a hydraulic manner by means of a servo piston (21, 23), may selectively be shifted into a forward and reverse drive condition, in which the planet carrier (12) of said reverse gear mechanism (4) may be coupled by means of the one friction disk clutch (2) forming the forward drive condition with a drive shaft (17) that is provided for the fixation of its sun wheel (15) and further provided for driving a secondary infinitely variable belt drive (5) which may be controlled by means of the control piston (25) of a hydraulic control device (6) acting at least on the axially displaceable disk member (28) of its primary disk, and in which the ring gear (16) of said reverse gear mechanism (4) may be connected with the transmission housing by means of the second friction disk clutch (3) forming the reverse drive condition, characterized in that the control piston (25) of said hydraulic control device (6) is connected axially fast with the servo cylinder (20) as axially arranged side-by-side of the servo piston (21) of said forward clutch (2) and is surrounded at least partwise by the control cylinder (27) which is fixed on the axially displaceable disk member (28) of the primary disk of said belt drive (5).

2. A clutch arrangement according to claim 1, characterized in that said servo cylinder (20) and said control piston (25) are formed of sheet preforms which are fixed on the hub of the sun wheel (15) of said reverse gear mechanism (4).

3. A clutch arrangement according to claim 1 or 2, characterized in that the hub of the sun wheel (15) of said reverse gear mechanism (4) forms a shoulder (24) for the hub of said displaceable disk member (28).

4. A clutch arrangement according to any of the claims 1 to 3, characterized in that a hollow space (26) is being formed between said servo cylinder (20) and said control piston (25) and arranged in the passage-way of the oil under pressure as extending to said servo piston (21).

5. A clutch arrangement according to claim 4, characterized in that a connecting bore (31) leading to an oil admission conduit (32) and provided in the hub of the sun wheel (15) of said reverse gear mechanism (4) and in the hollow drive shaft (17) for said belt drive (5) is connected to said hollow space (26), said oil admission conduit (32) being formed by a hollow drive shaft (33) of a pump which is mounted in the hollow drive shaft (17) and driven by the planet carrier (12) of said reverse gear mechanism (4).

6. A clutch arrangement according to claim 5, characterized in that a circular space (34), that is formed between said drive shaft (33) of a pump and said drive shaft (17) of said belt drive (5), is arranged in a further passageway of the oil under pressure which by means of a connecting bore (35) in the drive shaft (17) and in the hub of the displaceable disk member (28) is connected to said hydraulic control device (6).

7. A clutch arrangement according to any of the claims 1 to 6, characterized in that the servo cylinder (37) of the servo piston (23) of said reverse clutch (3) is integrally formed on an end wall of the transmission housing.

8. A clutch arrangement according to any of the claims 1 to 7, characterized in that the planet carrier (12) of said reverse gear mechanism (4) is mounted on said drive shaft (17) of said belt drive (5) by means of a needle bearing (18) and in that an integrally interconnected input shaft (1) of the transmission is provided for a direct connecting possibility with the drive motor of the vehicle.

**Revendications**

1. Dispositif d'embrayage pour un mécanisme inverseur de marche (4) à train d'engrenages épicycloïdal, qui peut être placé sélectivement dans une position de marche avant ou une position de marche arrière, au moyen de deux embrayages à disques de friction (2, 3) actionnables par voie hydraulique, chacun par l'intermédiaire d'un servo-piston (21, 23), et qui est incorporé dans un ensemble de transmission pour véhicules, en particulier pour véhicules automobiles à traction avant, dispositif dans lequel le porte-pignons satellites (12) du mécanisme inverseur de marche (4) peut être accouplé, au moyen de l'un des embrayages à disques de friction (2), définissant la marche avant, à un arbre d'entraînement (17) prévu pour la fixation de la roue planétaire associée (15) et portant une transmission par lien flexible (5) intercalée en aval et apte à varier en continu sous l'action du piston de réglage (25) d'un dispositif de réglage hydraulique (6), au moins au niveau de l'élément de disque (28) axialement déplaçable de son disque primaire, et dans lequel la couronne à denture intérieure (16) du mécanisme inverseur de marche (4) peut être reliée au carter de la transmission par l'intermédiaire du deuxième embrayage à disques de friction (3) définissant la marche arrière, caractérisé en ce que le piston de réglage (25) du dispositif de réglage hydraulique (6) est relié, en étant immobilisé axialement, au servo-cylindre (20), axialement voisin, du servo-piston (21) de l'embrayage de marche avant (2) et est entouré, au moins en partie, par le cylindre de réglage (27) fixé à l'élément de disque axialement déplaçable (28) du disque primaire de la transmission par lien flexible (5).

2. Dispositif d'embrayage selon la revendication 1, caractérisé en ce que le servo-cylindre (20) et le piston de réglage (25) sont formés d'éléments profilés en tôle, fixés sur le moyeu de la roue planétaire (15) du mécanisme inverseur de marche (4).

3. Dispositif d'embrayage selon la revendication 1 ou 2, caractérisé en ce qu'un épaulement formant butée (24) pour le moyeu de l'élément de disque déplaçable (28) est formé par le moyeu de la roue planétaire (15) du mécanisme inverseur de marche (4).

4. Dispositif d'embrayage selon l'une des revendications 1 à 3, caractérisé en ce qu'entre le servo-cylindre (20) et le piston de réglage (25), est ménagée une cavité (26) qui est disposée dans la voie d'écoulement de l'huile sous pression qui aboutit au servo-piston (27).

5. Dispositif d'embrayage selon la revendication 4, caractérisé en ce qu'un perçage de raccordement (31), ménagé dans le moyeu de la roue planétaire (15) du mécanisme inverseur de marche (4) et dans l'arbre creux (17) d'entraînement de la transmission par lien flexible (5) et débouchant dans la cavité (26), est raccordé à un canal d'amenée d'huile (32) lequel est défini par un arbre creux (33) d'entraînement de pompe monté dans l'arbre d'entraînement creux (17) et mis en mouvement par le porte-pignons satellites (12) du mécanisme inverseur de marche (4).

6. Dispositif d'embrayage selon la revendication 5, caractérisé en ce qu'une chambre annulaire (34), ménagée entre l'arbre d'entraînement de pompe (33) et l'arbre d'entraînement (17) de la transmission par lien flexible (5), est disposée dans une voie d'écoulement supplémentaire de l'huile sous pression, qui se raccorde au dispositif de réglage hydraulique (6) par l'intermédiaire d'un perçage de connexion (35) pratiqué dans l'arbre d'entraînement (17) et dans le moyeu de l'élément de disque déplaçable (28).

7. Dispositif d'embrayage selon l'une des revendications 1 à 6, caractérisé en ce que le servo-cylindre (37) du servo-piston (23) de l'embrayage de marche arrière (3) forme une seule pièce avec une paroi frontale du carter de la transmission.

8. Dispositif d'embrayage selon l'une des revendications 1 à 7, caractérisé en ce que le porte-pignons satellites (12) du mécanisme inverseur de marche (4) est monté, par l'intermédiaire d'un roulement à aiguilles (18), sur l'arbre d'entraînement (17) de la transmission par lien flexible (5), et un arbre d'entrée (1) de la transmission, auquel il est relié en formant une seule pièce, est prévu pour permettre une liaison directe avec le moteur d'entraînement du véhicule.